# EUROPEAN PATENT APPLICATION

(11) **EP 1 884 309 A2**
(43) Date of publication of application: **06.02.2008**
(21) Application number: 07253075.1
(22) Date of filing: 03.08.2007
(51) Int. Cl.: B23P 19/04, E05B 17/00

(54) **Flexible manufacturing machine for assembling combination cylinders for locks**

(30) Priority: 04.08.2006 ES 200602137
(71) Applicant: Talleres De Escoriaza, S.A., 20305 Irun (Guipuzcoa) (ES)
(72) Inventor: Chocarro, Celaya, Luis, 20305 Irun (ES)
(74) Representative: Howick, Nicholas Keith

(57) **Abstract**

Flexible manufacturing machine for assembling combination cylinders for locks, which comprises: a linear electric motor (2), a pin distributor (3), a pin feeder (4), a supplement distributor (5), a supplement feeder (6), a pin and supplement placing head (7), a support (8) for a single cylinder (12) and a computerized unit (9) for command and numerical control, operating the machine, where the linear electric motor (2) produces movement along a rail (1a) fitted to a longitudinal base (1), the pin distributor (3) is a cylindrical bar which is located parallel with the rail (1a), has along it as many radial sockets (3a) receiving the respective pins (13) as there are different pins and has means capable of moving it between a pin receiving position of the pin feeder (4) and another for delivery of the said pins to the placing head (7).

## Description

### FIELD OF THE INVENTION

This invention relates to a machine which is intended for placing the sets of combination pins and, if applicable, masterkeying supplements, in the combination cylinder of a lock; in particular, the invention relates to cylinders, the rotational safety of which is provided by pairs of pins.

The machine is designed with a criterion of great flexibility in the sense of being profitable for production of short manufacturing series, at the same time as being adaptable, with great speed, to the change of manufacturing parameters relating to fitting combination cylinders having different features.

### PRIOR ART

When one of these cylinders is to be assembled, it is necessary to take into account the various important differences which exist between cylinders which belong to a single family and which, therefore, have to be fitted in the same machine.

It is appropriate to point out the following from among these differences:

A different number of combination positions along the cylinder, which are to be fed with pins; in this regard, it must be outlined that, depending on the model, there are cylinders which have five positions in line, whereas others have three, six or seven.

Pins of various different forms and lengths (the range can run from less than 1 mm to 9 mm) can be fitted at each of these positions.

The number of pins to be fitted at each of these positions can vary a great deal, from a minimum of two to eight, if a masterkeyed cylinder is involved. In this case, we are designating with the generic term, pins, that which we shall subsequently distinguish as pins in the strict sense (cylindrical parts whose length is greater than their diameter) and as masterkeying supplements (cylindrical parts whose length is less than their diameter).

The longitudinal distance between successive pin positions can vary among various different cylinders and is even different between successive positions within a single cylinder.

The longitudinal distance between the front of the cylinder and the first position can also vary among various different models of cylinder belonging to a single family.

There may be small differences among the diameters of pins fitted at a single cylinder position.

The machines known in this field are designed for the production of large manufacturing series and work at high speeds. These are machines with very high prices which can only be made profitable in this way, producing large series and at high speeds. On the other hand, as we shall see below, they are excessively rigid for changing parameters in adapting to fitting different cylinders.

With regard to this, there exist rotary plate automatic "transfer" machines. These machines are mechanical and comprise a plurality of clamps for holding respective cylinders in which pins which have previously been placed in mechanical, fixed boxes or cases are to be fitted; when the plate rotates, each cylinder held in a clamp takes up a station below a case to receive, at one time, the bottom pins of each position's pair of pins, then below a following case to receive, at one time, all the top pins give [*sic*]¹ the previous pair and so on.

In this composition, the plate assembly, plus the support clamps and the cylinders, involve a great inert mass in motion, which limits operating speed and precision. Furthermore, the system of preloading the pins in the cases has the result that any variation in any of the parameters indicated above, such as the distance between cylinder positions or from the first position to the front of the said cylinder, entails the need to change the preloading
*"dan" (give) should presumably be "de" (from) - Translator*
cases, which takes long stoppage times, during which a considerable number of cylinders could be fitted; therefore, this machine composition is only profitable for producing large batches of a single product model and is not profitable when it is a matter of assembling small series of different models of cylinder. Furthermore, if the machine is made for fitting two pins (bottom and top) at each position, it will not be possible to fit three or more, as there will be no available space on the plate for placing more support clamps in intermediate stations; the solution in terms of providing recesses at the outset for additional intermediate stations represents an increase in costs, a greater mass in motion and lower working speed. What is more, the pins are selected and positioned in the cases by means of mechanical equipment, vibrators for example, which, at present, are not suitable for selecting, positioning and feeding pins of a diameter which exceeds their length, as is the case with masterkeying supplements.

There exist linear automatic "transfer" machines, in which the cylinders, instead of being arranged in a circle, are fitted in individual supports which, in turn, are fitted on carriages or "palets" [sic] which are moved along the machine, taking up a station at the places where they are to receive the respective sets of bottom and top pins. On these machines, there are the same limitations and drawbacks as mentioned for the rotary "transfer" machines, as, ultimately, the working method is the same: the cylinders successively take up a station to receive the pins prepared in the boxes; in the first case, the stations are arranged in a circle and, in the second case, they are aligned longitudinally.

### EXPLANATION OF THE INVENTION AND ADVANTAGES

In view of this state of affairs, the object of this invention is a particular design of machine for placing not only the sets of combination pins but also, if applicable, the masterkeying supplements, in the combination cylinder. To this end, the machine proposed comprises: a linear electric motor, a pin distributor, a pin feeder, a supplement distributor, a supplement feeder, a pin and supplement placing head, a support for a single cylinder and a computerized unit for command and numerical control, operating the machine; where the linear electric motor produces movement along a rail fitted to a longitudinal base, the pin distributor is a cylindrical bar which is located parallel with the rail, has along it as many radial sockets receiving the respective pins as there are different pins and has means capable of moving it between a position for receiving pins from the pin feeder and another for delivering the said pins to the placing head, the pin feeder has independent pin feeding positions for the pin distributor receiving positions, the supplement distributor is located parallel with the rail and has along it as many supplement receiving positions as there are different classes of supplements, the supplement feeder has independent supplement feeding positions for the supplement distributor receiving positions, the pin placing head travels with the linear motor and has means capable of taking one of the pins which is suitable from the pin distributor and delivering it in the precise place of the combination cylinder, and of taking one of the supplements which is suitable and delivering it in the precise place of the combination cylinder and the computerized unit for command and numerical control, operating the machine, comprises processing programs for the various different models and sizes of combination cylinders and of the pins and supplements to be fed.

The moving means of the pin distributor are alternating rotary means which drive the pin receipt and delivery positions and, in this pin distributor, the diameter of the radial sockets is adjusted to exceed that of the pins and these sockets have a movable floor which is formed by the tip of a rod which screws in through the open base of the radial sockets themselves.

The head, for its part, has a hollow vertical rod which is connected to a vacuum pump or Venturi effect ejector and which is capable of being axially aligned with all and each one of the pins and supplements and with all and each one of the positions which the combination cylinder has for placing the sets of pins and supplements.

The functional philosophy of this machine is radically different from the others known; instead of arranging on the machine table all the cylinders which are to be fitted in each batch or cycle and which take up successive stations as has been stated, now one single cylinder is arranged, in which the pins and supplements are fitted one by one.

This machine composition offers very advantageous services, among which the following are to be emphasized:

It enables a construction of much smaller dimensions than those known.

The pins and supplements weigh less than one gram and are fed one by one with light moving elements and, therefore, inertia is very low and high speeds can be reached in the movement of these to their positions in the cylinder.

The movement of the pins and supplements to their positions in the cylinder is carried out by means of a linear electric motor and robots controlled by numerical control, which enables: high speed in the feed operations; creation of computer programs for producing a change of models, measurements and distances in a practically instantaneous manner; the features of each model of cylinder to be received from a data network (Internet) without intervention by the operator or, alternatively, they can be read from a bar code incorporated in the cylinder or in the order for its manufacturing. All this results in flexibility of the machine of such a high level that, without mechanical changes but by means of a computer program, it is able to adjust automatically to the various different steps between cylinder positions, such as loading a different number of positions (3, 5, 6, 7), or such as loading a different number of pins at each position of a single cylinder, which makes masterkeying possible.

Due to the small size of the pin selection and conveying elements, the cylinder can be placed in line with the alternating rotary pin distributor, with which the pins can be fed, with the use of the said high speed linear motor with just two movements controlled by numerical control (CNC), one along a Y axis for the horizontal translation of the head which takes and delivers the pins and the other along a Z axis in order for the hollow vertical rod to take the pin from the radial socket of the distributor and for it then to deliver it inside the corresponding position in the cylinder.

In the operation of delivering the pin, the use of CNC gives precision and reliability with which it can be delivered without being dropped, it thus being prevented from turning over, which enables the handling of the masterkeying supplements which, due to their shortness, have a great tendency to turn over in the air if they are dropped; in this operation, with the CNC or stepping motor, the pin delivery vertical travel can be altered according to the length of the pin and the number of them at one single position, among other circumstances.

Another special feature of the invention is that the supplement distributor and supplement feeder assembly comprises an airtight box which is connected to a compressed air inlet, in conjunction with channelling ducts which place and serve the supplements in their flat position.

### DRAWINGS AND REFERENCES

In order for the nature of this invention to be better understood, in the attached drawings we show an industrial embodiment which is by way of a merely illustrative, non-limiting example.
Figure 1 is a view in perspective of the machine according to the invention. It includes two enlarged details which show examples of the pin (13) and supplement (14) respectively and of the pin and supplement placing head (7).
Figure 2 is a top plan view of the machine in figure 1.
Figure 3 is an enlarged view of section II-II indicated in figure 2.
Figure 4 is a top plan view which shows an enlargement of a portion of the pin distributor (3) according to figure 2.
Figure 5 is an enlarged view of detail V indicated in figure 3 and shows the pin distributor (3) with the radial socket (3a) in the vertical position.
Figures 6, 7 and 8 illustrate the pin distributor (3) operation for taking and delivering the pins (13). Figure 6 is an enlarged view of detail VI indicated in figure 3 and shows the radial socket (3a) rotated to its position facing the pin feeder (4) and having received a pin (13). Figure 7 shows the radial socket (3a) in figure 6 again in the vertical position in figure 5 and holding the pin (13). Figure 8 is like figure 7 but with the pin transferred to the hollow vertical rod (11).

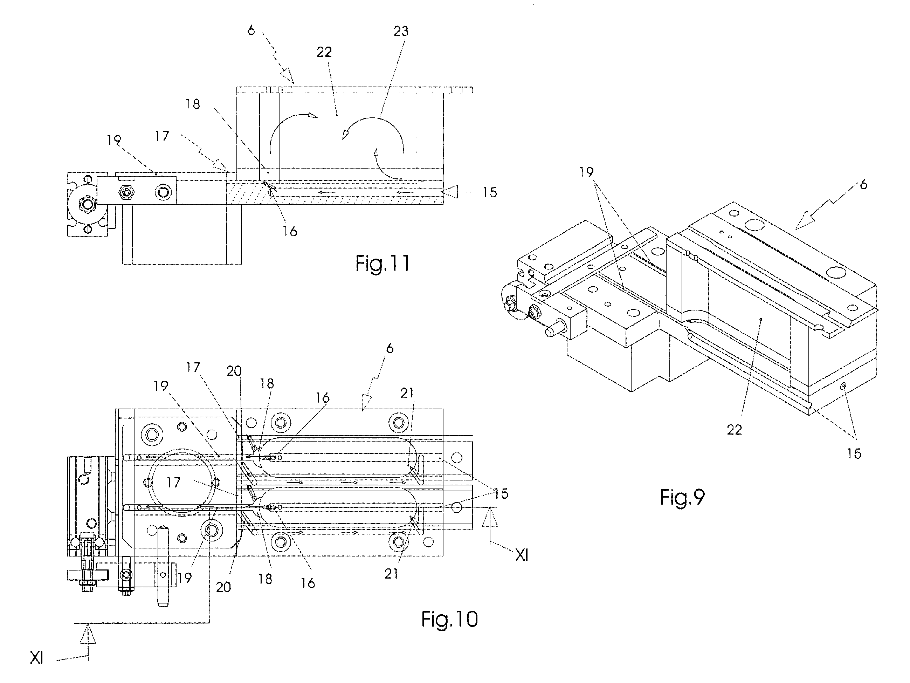

Figures 9, 10 and 11 show the supplement feeder (6) in partially sectioned perspective, in plan and in section indicated XI-XI in figure 10.

The following references are indicated in these illustrations.
1.- Longitudinal base
1a.- Rail on longitudinal base (1)
2.- Linear electric motor
3.- Pin (13) distributor
3a.- Pin (13) distributor radial sockets
4.- Pin (13) feeder
5.- Supplement (14) distributor
6.- Supplement (14) feeder
7.- Pin (13) and supplement (14) placing head
8.- Support for combination cylinder (12)
9.- Computerized unit for command and numerical control
10.- Threaded rod in radial socket (3a)
11.- Head (7) hollow vertical rod
12.- Combination cylinder
13.- Combination pins
14.- Masterkeying supplements
15.- Rear air injection duct.
16.- Channel for outlet of air for impulse and agitation (suspension, nebulization) of supplements.
17.- Front air injection duct
18.- Area for storing supplements prior to outlet.
19.- Oriented supplements outlet duct
20.- Impulse air return channel.
21.- Channel for outlet of return air used for advancing the pins to the outlet area.
22.- Masterkeying supplement chamber.
23.- Turbulence

### EXPLANATION OF A PREFERRED EMBODIMENT

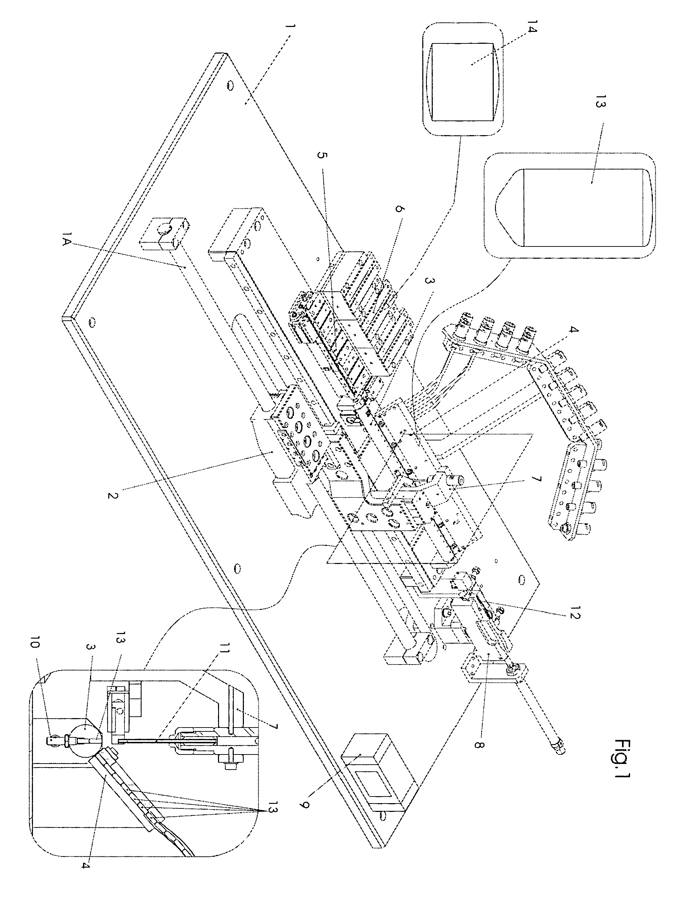

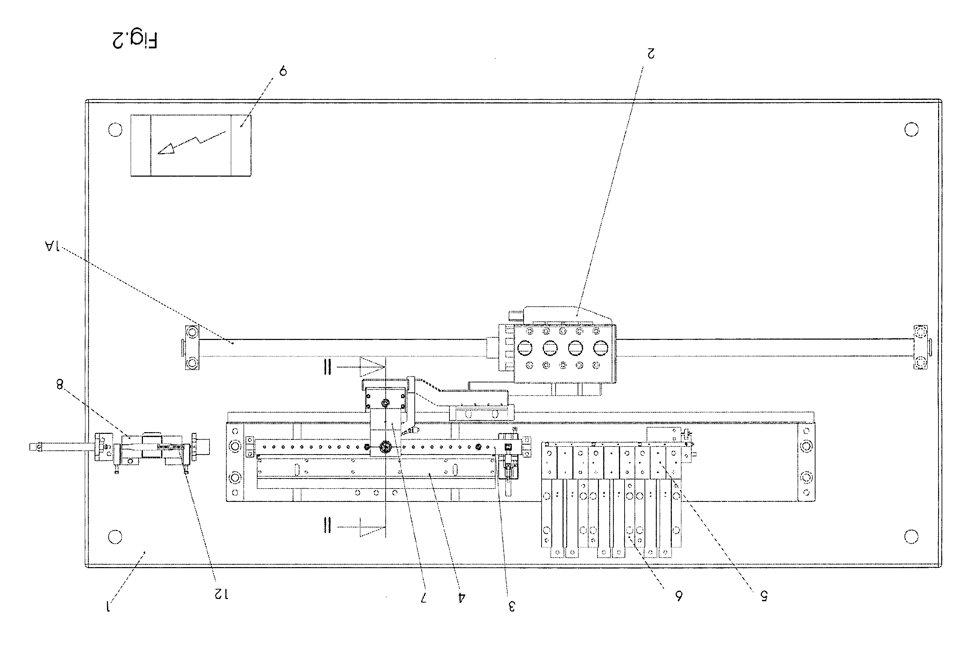

With regard to the drawings and references set out above, the attached drawings illustrate a preferred embodiment of the object of the invention, referring to a flexible manufacturing machine for assembling combination cylinders, i.e. for placing the sets of combination pins (13) and, if applicable, masterkeying supplements (14), in the combination cylinder (12). The composition of the machine proposed is illustrated in figures 1 and 2, although in a more expressive way in figure 1; it comprises: a linear electric motor (2), a pin distributor (3), a pin feeder (4), a supplement distributor (5), a supplement feeder (6), a pin (13) and supplement (14) placing head (7), a support (8) for a single cylinder (12) and a computerized unit (9) for command and numerical control, operating the machine, where the linear electric motor (2) produces movement along a rail (1a) fitted to a longitudinal base (1), the pin distributor (3) is a cylindrical bar which is located parallel with the rail (1a), has along it as many radial sockets (3a) receiving the respective pins (13) as there are different pins (13) and has means capable of moving it between a position for receiving pins (13) from the pin feeder (4) and another for delivering them to the placing head (7), the pin feeder (4) has independent pin (13) feeding positions for the pin distributor (3) receiving positions, the supplement distributor (5) is located parallel with the rail (1a) and has along it as many supplement (14) receiving positions as there are different classes of supplements, the supplement feeder (6) has independent supplement (14) feeding positions for the supplement distributor (5) receiving positions, the pin (13) placing head (7) travels with the linear motor (2) and has means capable of taking one of the pins (13) which is suitable from the pin distributor (3) and delivering it in the precise place of the combination cylinder (12) and of taking one of the supplements (5) [*sic* - *Translator*] which is suitable and delivering it in the precise place of the combination cylinder (12), and the computerized unit (9) for command and numerical control, operating the machine, comprises processing programs for the various different models and sizes of combination cylinders (12) and of the pins (13) and supplements (14) to be fed. As has been stated, the functional philosophy of this machine consists, by means of the head (7), of taking pins (13) from the pin distributor (3), or supplements (14) from the supplement distributor (5), in order for them to be moved one by one with great speed and precision to their position in the combination cylinder (12), which is carried out by the linear motor (2) under the command and CNC of the computer program of the computerized unit (9). In this composition, the invention considers a solution in which the head (7) has a hollow vertical rod (11) which is connected to a vacuum pump and which is capable of being axially aligned with all and each one of the pins (13) and supplements (14) and with each and every one of the positions which the combination cylinder has for placing the sets of pins (13) and supplements (14), in such a way that the capture and release of the pins (13) takes place, producing and ceasing the suction effect generated by the vacuum pump associated with the head (7); which enables an effective, reliable solution to be given for the delicate handling which the masterkeying supplements require, as has been stated.

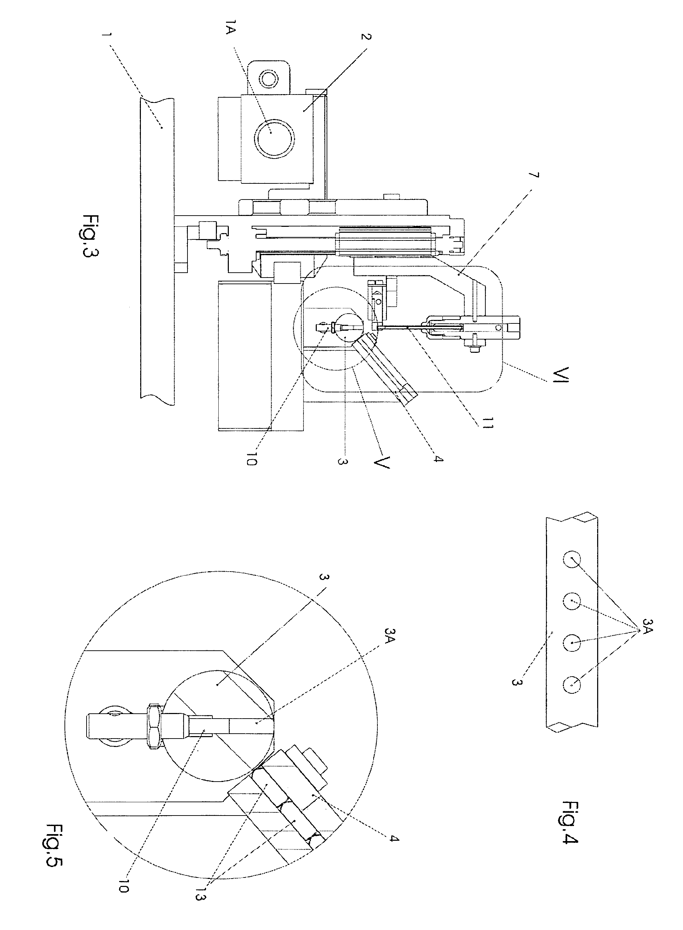

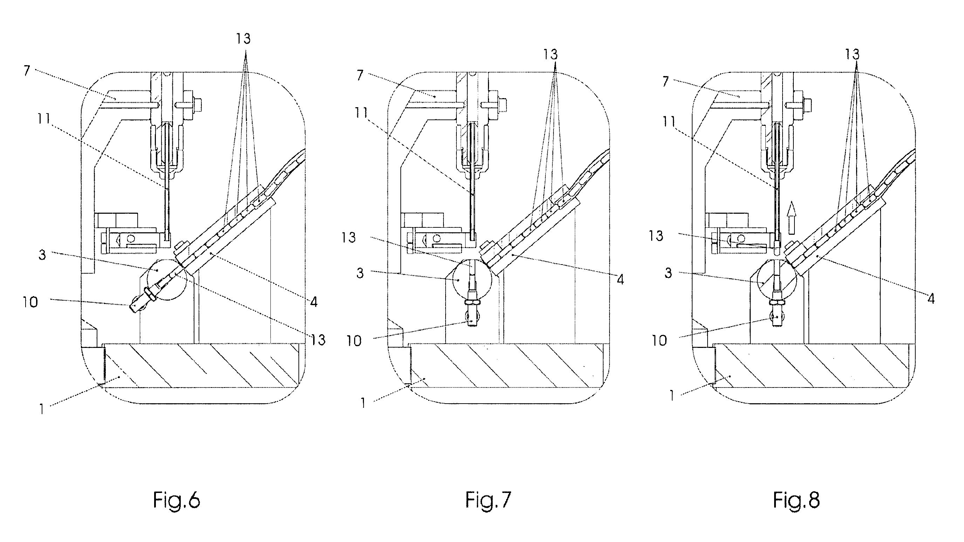

According to the invention, the moving means of the pin distributor (3) are alternating rotary means which drive the pin (13) receipt and delivery positions. Their composition is shown in figures 1 and 2 and, in greater detail, in figures 4 and 5. Their operation is very simple, effective and reliable, as is illustrated by means of figures 6 to 8; in figure 6, the pin distributor (3) is rotated so that it receives one of the pins (13) lined up within the pin feeder (4); in figure 7, the pin distributor (3) has rotated to the vertical position, being aligned with the tip of the hollow vertical rod (11); in figure 8, the hollow vertical rod (11) has come down and, by suction, has captured the pin (13) from the pin distributor (3) and it has then gone up again to the position in which it will carry out the rapid movement to the position in the cylinder (12) which has been programmed in advance.

Another special feature is that the diameter of the radial sockets (3a) of the pin distributor (3) is adjusted to exceed that of the pins (13) and these sockets have a movable floor which is formed by the tip of a rod (10) which screws in through the open base of the radial sockets (3a) themselves. With this solution, the depth of the pin distributor (3) radial socket (3a) can be regulated in accordance with the length of the pin (13) [so that the position of capture by the hollow vertical rod (11) is always the same]; for this, it is sufficient to screw the rod (10) into the radial socket (3a) to a greater or lesser extent and also with this there can be a quick change of pin models and/or length, for another of the same or a different key system.

Another special feature of the invention is that the supplement distributor (5) and supplement (14) feeder assembly comprises an airtight chamber (22) which is connected to a compressed air inlet (15), in conjunction with channels (16) which place and serve the supplements (14) in their flat position.

The head (7) has a hollow vertical rod (11) which is connected to a vacuum pump and which is capable of being axially aligned with all and each one of the pins (13) and supplements (14) and with all and each one of the positions which the combination cylinder has for placing the sets of pins (13) and supplements (14).

The inlet of air is carried out alternately by the ducts (15 and 17). Air is impelled from the duct (15) to the channel (16), the outlet of air through the channel (16) causes the supplements to be pushed up, with turbulence being formed and the supplements are "suspended" in the air inside the chamber (22), falling on to the area (18) and being pushed out through the duct (19), pushed by the very air which comes out through (16). Alternately, air is impelled through the duct (17) to withdraw the supplements stored in the area (18) and to prevent an accumulation of pins unsuitably placed and thus to prevent blockages; the cycle is subsequently repeated.

The secondary channel of return air (20), on entering the store through the channel (21), contributes to the "suspension" of the supplements and pushes the supplements from the "rear" area of the store to the outlet area.

In this way, the masterkeying supplements (14) are served in the position in which they will be captured, moved and placed inside the cylinder (12), handling the said suction effect. Operation consists of the masterkeying supplements (14) being situated in the said closed chamber (22) of the supplement feeder (6) where, due to the effect of compressed air, they are flying around and reaching an outlet area which is adjusted to their dimensions and into which they are impelled by a fine air jet (16); other air jets (17) near this outlet attend to preventing friction between supplements (14), easing their advance and returning to the group of pins in the chamber (22), causing those which were not well placed for the outlet to fly around; once the outlet has them lined up, these masterkeying supplements (14) are conveyed by a well-fitting channel to the supplement distributor (5).

## Claims

1. Flexible manufacturing machine for assembling combination cylinders for locks, in particular for placing the sets of combination pins (13) and, if applicable, masterkeying supplements (14), in the combination cylinder (12), **characterized in that** it comprises: a linear electric motor (2), a pin distributor (3), a pin feeder (4), a supplement distributor (5), a supplement feeder (6), a pin (13) and supplement (14) placing head (7), a support (8) for a single cylinder (12) and a computerized unit (9) for command and numerical control, operating the machine, where the linear electric motor (2) produces movement along a rail (1a) fitted to a longitudinal base (1), the pin distributor (3) is a cylindrical bar which is located parallel with the rail (1a), has along it as many radial sockets (3a) receiving the respective pins (13) as there are different pins (13) and has means capable of moving it between a position for receiving pins (13) from the pin feeder (4) and another for delivering the said pins to the placing head (7), the pin feeder (4) has independent pin (13) feeding positions for the pin distributor (3) receiving positions, the supplement distributor (5) is located parallel with the rail (1a) and has along it as many supplement (14) receiving positions as there are different classes of supplements, the supplement feeder (6) has independent supplement (14) feeding positions for the supplement distributor (5) receiving positions, the pin (13) placing head (7) travels with the linear motor (2) and has means capable of taking one of the pins (13) which is suitable from the pin distributor (3) and delivering it in the precise place in the combination cylinder (12) and of taking one of the supplements (14) which is suitable and delivering it in the precise place in the combination cylinder (12) and the computerized unit (9) for command and numerical control, operating the machine, comprises processing programs for the various different models and sizes of combination cylinders (12) and of the pins (13) and supplements (14) to be fed.

2. Flexible manufacturing machine for assembling combination cylinders for locks according to claim 1, **characterized in that** the moving means of the pin distributor (3) are alternating rotary means which drive the pin (13) receipt and delivery positions.

3. Flexible manufacturing machine for assembling combination cylinders for locks, according to the preceding claims, **characterized in that** the diameter of the radial sockets (3a) of the pin distributor (3) is adjusted to exceed that of the pins (13) and these sockets have a movable floor which is formed by the tip of a rod (10) which screws in through the open base of the radial sockets (3a) themselves.

4. Flexible manufacturing machine for assembling combination cylinders for locks according to the preceding claims, **characterized in that** the supplement distributor (5) and supplement feeder (6) assembly comprises an airtight chamber (22) which is connected to a compressed air inlet (15), in conjunction with channelling ducts (16) which place and serve the supplements (14) in their flat position.

5. Flexible manufacturing machine for assembling combination cylinders for locks according to the preceding claims, **characterized in that** the head (7) has a hollow vertical rod (11) which is connected to a vacuum pump and which is capable of being axially aligned with each and every one of the pins (13) and supplements (14) and with each and every one of the positions which the combination cylinder has for placing the sets of pins (13) and supplements (14).

6. Flexible manufacturing machine for assembling combination cylinders for locks according to the preceding claims, **characterized in that** the supplement feeder (6) has a chamber (22) with a duct (17) for the inlet of air, generating turbulence (23) which suspends the supplements, for them to fall into the storage area (18) leading to the outlet duct (19).
